# EUROPEAN PATENT APPLICATION

(11) **EP 2 719 837 A1**
(43) Date of publication of application: **16.04.2014**
(21) Application number: 12800947.9
(22) Date of filing: 29.05.2012
(51) Int. Cl.: E02F 9/16

(54) **CONSTRUCTION MACHINE**

(30) Priority: 13.06.2011 JP 2011131134
(71) Applicant: Hitachi Construction Machinery Co., Ltd., Bunkyo-ku Tokyo 112-0004 (JP)
(72) Inventor: TANAKA Tomoyuki, Tsuchiura-shi Ibaraki 300-0013 (JP); KIMURA Shogo, Tsuchiura-shi Ibaraki 300-0013 (JP)
(74) Representative: MERH-IP Matias Erny Reichl Hoffmann
(86) International application number: PCT/JP2012/063747
(87) International publication number: WO 2012/172966

(57) **Abstract**

An entrance way (29) is provided on a left front surface (13B) surrounded by the left front pillar (14), the left intermediate pillar (16), and the left front roof pillar (19) of the cab box (13), and a door (30) for opening/closing this entrance way (29) is mounted rotatably on a left intermediate pillar (16). A seal member (31) for sealing the entire periphery of the cab box (13) when the door (30) is closed is provided in the periphery of the door (30). On the lower side of the left front roof pillar (19), a seal receiving member (32) is provided separately from the left front roof pillar (19), and this seal receiving member (32) forms a seal receiving surface (32C) with which an upper seal portion (31C) extending in the front-rear direction at an upper side position of the seal member (31) is brought into contact when the door (30) is closed.

## Description

### TECHNICAL FIELD

The present invention relates to a construction machine such as a hydraulic excavator provided with a cab on which an operator gets onboard, for example.

### BACKGROUND ART

In general, hydraulic excavators as construction machines include a small-sized hydraulic excavator called a mini excavator suitable for a work on a small work site. This small-sized hydraulic excavator is formed having a small upper revolving structure so as to be suitable for running and working on a small site.

Here, the small-sized hydraulic excavator is composed of an automotive lower traveling structure, the upper revolving structure rotatably mounted on the lower traveling structure and having a cab provided on a revolving frame forming a support structural body, and a working mechanism tiltably provided on the front side in the front-rear direction of the upper revolving structure capable of moving upward/downward.

The cab of the hydraulic excavator has a cab box in which five pillars extending in the vertical direction by being located on the left front, the right front, the left intermediate, the left rear, and the right rear and roof pillars connecting an upper part of each of the pillars are provided, and spaces between each of the pillars become a front surface, a left front surface, a left rear surface, a right surface, a rear surface, and a top surface; an entrance way provided on the left front surface surrounded by the left front pillar, the left intermediate pillar, and the left front roof pillar of the cab box; and a door having a rear end mounted on the left intermediate pillar rotatably in the front-rear direction in order to open/close the entrance way. Moreover, a seal member sealing between the door and the cab box over the entire periphery is provided around an inner surface of the door when the door is closed and the entrance way is closed (See Patent Document 1, for example).

### PRIOR ART DOCUMENT

### PATENT DOCUMENT

Patent Document 1: International Publication No. WO99/61711

### SUMMARY OF THE INVENTION

The hydraulic excavator according to the above described Patent Document 1 is configured such that, when the door is closed, this door enters the left front pillar and the left front roof pillar of the cab box so as not to interfere with an obstruction around it when the upper revolving structure performs a revolving operation and also in order to improve appearance. In order for the door to enter between each pillar, a pipe material forming each pillar needs to be formed having an irregular shape. In this case, the seal member provided around the door prevents rainwater, earth and sand, dusts and the like from entering the cab by being brought into contact with the pillar in the state entering between the pillars.

Here, it is difficult to form an irregular shape over the entire length of the sectional diameter of the pipe material forming the pillar, and moreover, the pipe material having a complicated sectional shape has high bending strength and cannot be bent easily. On the other hand, if the sectional shape of the pillar is simplified, an area in contact with the seal member becomes small, and thus, air tightness of a seal line formed by the seal member brought into contact with the pillar, when the door is closed, becomes low.

Particularly, in a front vertical seal portion provided in the vertical direction along the front end of the door and a rear vertical seal portion provided in the vertical direction along the rear end of the door in the seal member, rainwater or earth and sand can easily fall along these seal portions, and entry of rainwater or earth and sand into the cab be prevented even with low air tightness. However, in an upper seal portion located on the upper side of the door and extending in the lateral direction, rainwater or earth and sand do not fall easily and if air tightness is low, rainwater or earth and sand can enter the cab, and there is a problem that a work environment in the cab becomes poor.

In view of the above-discussed problems with the conventional art, it is an object of the present invention to provide a construction machine which can make a work environment in the cab favorable by preventing entry of rainwater, earth and sand, dusts and the like through a space between the cab box and the door by improving air tightness on an upper portion of the seal member.
(1) A construction machine according to the present invention is composed of an automotive lower traveling structure, an upper revolving structure rotatably mounted on the lower traveling structure and having a cab provided on a revolving frame forming a support structural body, and a working mechanism tiltably provided on the front side in the front-rear direction of the upper revolving structure, wherein the cab is provided with; a cab box in which five pillars extending in the vertical direction by being located on the left front, the right front, the left intermediate, the left rear, and the right rear and roof pillars connecting an upper part of each of the pillars are provided, and spaces between each of the pillars become a front surface, a left front surface, a left rear surface, a right surface, a rear surface, and a top surface; an entrance way provided on the left front surface surrounded by the left front pillar, the left intermediate pillar, and the left front roof pillar of the cab box; a door having the rear end mounted on the left intermediate pillar rotatably in the front-rear direction in order to open/close the entrance way; and a seal member provided by surrounding a periphery of an inner surface of the door and sealing between the door and the cab box over the entire periphery when the door is closed.

In order to solve the above-described problems, a feature of a configuration employed by the invention in claim 1 is that, a seal receiving member is provided on the lower side of the left front roof pillar forming the roof pillar, and an upper seal portion extending in the front-rear direction at an upper side position of the door in the seal member is configured to be brought into contact with the seal receiving member.

With this arrangement, on the lower side of the left front roof pillar, the seal receiving member is provided separately from this left front roof pillar. As a result, this seal receiving member can be formed having a portion with a large area with which the upper seal portion of the seal member is brought into contact when the door is closed.

Therefore, when the door is closed, the upper seal portion extending in the front-rear direction can be brought into contact in a large area with the seal receiving member, and high air tightness can be obtained in a seal line by this upper seal portion. As a result, even in the seal line in the front-rear direction where rainwater or earth and sand do not flow easily, entry of rainwater or earth and sand into the cab can be reliably prevented, and thus, the work environment in the cab can be made favorable. On the other hand, when the cab box is to be manufactured, it is no longer necessary to form a large portion for bringing the seal member into contact with the pillar, and a sectional shape of the pillar (pipe material) can be simplified, and forming, bending and the like can be performed easily.
(2) According to the present invention, a lower surface of the left front roof pillar is formed as a recessed portion which is recessed in a stepped state from an outer surface to an inner side, the seal receiving member is provided on the lower side of the recessed portion of the left front roof pillar, and the upper seal portion of the door is configured to be brought into contact with the seal receiving member in a state where the door is closed.

With this arrangement, since the recessed portion which is recessed in a stepped state from the outer surface to the inner side is formed on the lower surface of the left front roof pillar, the seal receiving member can be provided by using the shape of this recessed portion. As a result, in the state where the door is closed, the upper seal portion of the door can be brought into contact with the seal receiving member, and high air tightness can be obtained.
(3) According to the present invention, the seal receiving member is configured to be mounted on a lower side position of an outer surface of the left front roof pillar by using welding means.
   With this arrangement, the seal receiving member can be easily mounted at a lower side position of the outer surface of the left front roof pillar by using the welding means. Moreover, by integrally welding the seal receiving member to the left front roof pillar, strength of the cab box including the left front roof pillar can be improved.
(4) According to the present invention, the seal receiving member is formed, having a crank shape, of an outer vertical plate portion located on the lower side of the outer surface of the left front roof pillar and extending in the front-rear direction, a horizontal plate portion bent in the horizontal direction inward from a lower end portion of the outer vertical plate portion and extending in the front-rear direction in a state fitted in the recessed portion of the left front roof pillar, and an inner vertical plate portion bent downward from a depth portion of the horizontal plate portion and extending in the front-rear direction; and the seal member provided on the door is configured to be brought into contact with the inner vertical plate portion.

With this arrangement, since the seal receiving member has a crank-shaped sectional shape by the outer vertical plate portion, the horizontal plate portion, and the inner vertical plate portion, when the door is closed, the upper side portion of the door can be made to enter the seal receiving member, and an outer surface of the door can be made the same plane as the outer vertical plate portion of the seal receiving member. As a result, when the upper revolving structure performs a revolving operation, the door can be prevented from interfering with an obstruction around it and also, the appearance can be made favorable.

### BRIEF DESCRIPTION OF THE DRAWINGS

Fig. 1 is a front view illustrating a small-sized hydraulic excavator applied to an embodiment of the present invention.
Fig. 2 is a plan view of the hydraulic excavator when seen from above.
Fig. 3 is a perspective view illustrating the hydraulic excavator from the front side.
Fig. 4 is a perspective view of a cab box, a door, and a seal receiving member illustrated from the rear side.
Fig. 5 is a perspective view of a state in which the door is opened to a full open position when seen from the position similar to Fig. 4.
Fig. 6 is an exploded perspective view illustrating the cab box and the seal receiving member.
Fig. 7 is an enlarged sectional view of an essential part of a state in which the door is closed and a seal member is brought into contact with the seal receiving member when seen from an arrow VII-VII direction in Fig. 4.
Fig. 8 is an enlarged sectional view of an essential part of a state in which the door is opened when seen from a position similar to Fig. 7.
Fig. 9 is a front view illustrating the seal receiving member as a single body in an enlarged manner.
Fig. 10 is a perspective view illustrating the seal receiving member as a single body in an enlarged manner.
Fig. 11 is a front view illustrating a small-sized hydraulic excavator according to a modification of the present invention.

### MODE FOR CARRYING OUT THE INVENTION

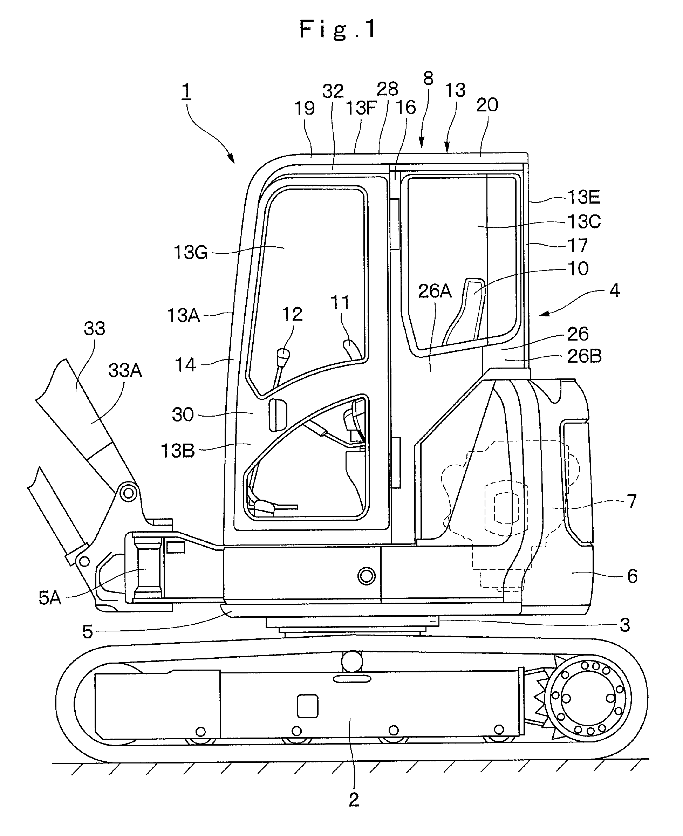

As a typical example of a construction machine applied to an embodiment of the present invention, a hydraulic excavator with cab specification will be described below in details as an example by referring to Figs. 1 to 10.

In Fig. 1, designated at 1 is a hydraulic excavator with cab specification as a construction machine applied to this embodiment. This hydraulic excavator 1 is a small-sized hydraulic excavator called a mini excavator suitable for a work in a small work site. The hydraulic excavator 1 is composed of an automotive lower traveling structure 2, an upper revolving structure 4 rotatably mounted on the lower traveling structure 2 through a revolving apparatus 3, and a working mechanism (not shown) provided on the front side in the front-rear direction of the upper revolving structure 4 and carrying out an excavating work of earth and sand, for example.

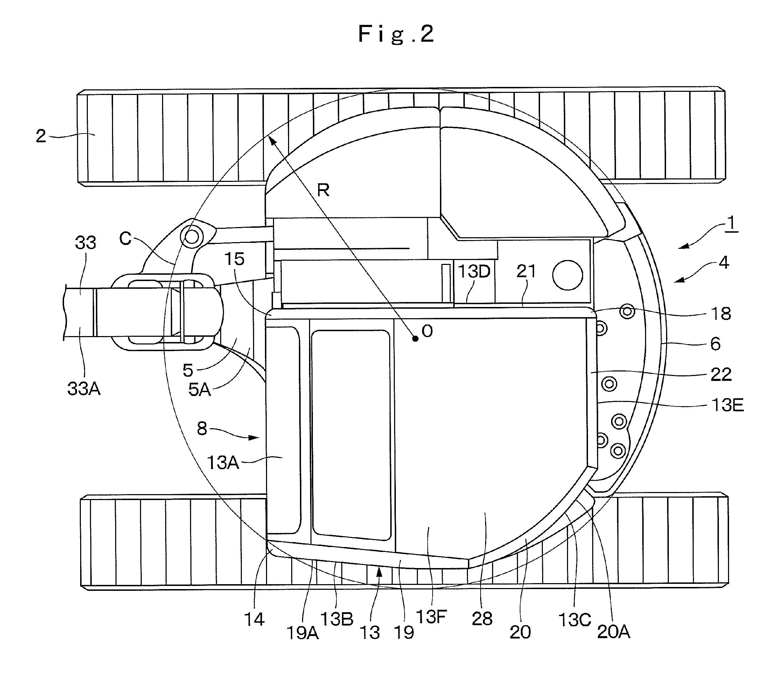

Here, as illustrated in Fig. 2, the upper revolving structure 4 has a width dimension in the left-right direction substantially equal to a vehicle width of the lower traveling structure 2 and is also formed having a substantially circular shape when seen from above so as to be contained in a virtual circle C having a revolving radius R around a revolving center O. As a result, the hydraulic excavator 1 is configured as a rear small-revolving type hydraulic excavator in which, if the upper revolving structure 4 revolves around the revolving center O on the lower traveling structure 2, a rear surface of a counterweight 6 which will be described later is substantially accommodated in the vehicle width of the lower traveling structure 2.

It should be noted that the above described revolving radius R is defined by a distance from the revolving center O to the rear surface of the counterweight 6, and the above described virtual circle C is a trajectory of the rear surface of the counterweight 6 when the upper revolving structure 4 revolves.

The upper revolving structure 4 is composed of a revolving frame 5 forming a support structural body, an engine 7 provided on the revolving frame 5 and which will be described later, a cab 8 and the like. On the front side of the revolving frame 5, a swing bracket 5A is provided, and on the swing bracket 5A, a working mechanism 33 which will be described later is provided capable of swing and moving upward/downward.

The counterweight 6 is provided on a rear part of the revolving frame 5, and the counterweight 6 holds weight balance with the working mechanism 33. The counterweight 6 is formed by being curved in an arc shape so as to cover the engine 7 which will be described later from the rear side.

The engine 7 is located on the front side of the counterweight 6 and mounted on the rear part of the revolving frame 5 (indicated by a dot line in Fig. 1), and the engine 7 is arranged in a lateral state extending in the left-right direction. This engine 7 is to rotate and drive a hydraulic pump.

Designated at 8 is a cab provided on the revolving frame 5. This cab 8 is for an operator to get on and is formed having a box-shaped body extending in the vertical direction. The cab 8 is composed of a floor member 9, an operator's seat 10, a cab box 13, a door 30, a seal member 31, a seal receiving member 32 and the like which will be described later.

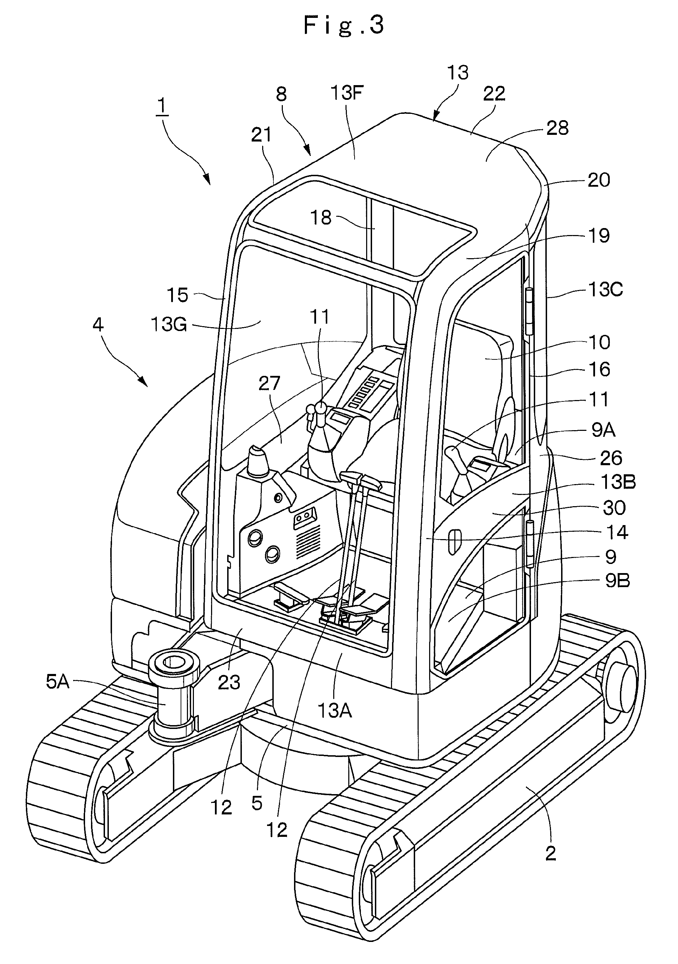

The floor member 9 constitutes a bottom portion of the cab 8 (See Fig. 3), and on the floor member 9, an operator gets on. The floor member 9 has its front-side position mounted on a front-side position of the revolving frame 5, and its rear side position is mounted on a structural body (not shown) of the revolving frame 5 or the counterweight 6. The floor member 9 is composed of a stepped seat support platform 9A located on the rear side and on which the operator's seat 10 which will be described later is mounted, and a footrest plate 9B located on the front side of the seat support platform 9A and on which the operator places the foot. On the other hand, on the rear side of the seat support platform 9A, the rear side of the cab box 13 which will be described later is mounted, and on the front side of the footrest plate 9B, the front side of the cab box 13 and an operating lever/pedal 12 for running are mounted.

The operator's seat 10 is provided on the seat support platform 9A of the floor member 9, and the operator's seat 10 is on which the operator is seated. On the both left and right sides of the operator's seat 10, an operating lever 11 for work is provided, and the operating lever/pedal 12 for running is provided on the front position of the footrest plate 9B which is on the front side.

Designated at 13 is the cab box provided on the floor member 9. As illustrated in Figs. 3 to 6, this cab box 13 has five vertical pillars, extending in the vertical direction which will be described later, that is, a left front pillar 14, a right front pillar 15, a left intermediate pillar 16, a left rear pillar 17, and a right rear pillar 18, and also has a roof pillar formed of a left front roof pillar 19, a left rear roof pillar 20, a right roof pillar 21, and a rear roof pillar 22. Moreover, spaces between each of the pillars 14 to 22 are a front surface 13A, a left front surface 13B, a left rear surface 13C, a right surface 13D, a rear surface 13E, and a top surface 13F. On the other hand, in the cab box 13, an operator's room 13G in which an operator carries out a work is formed on the floor member 9 by being covered by each of the surfaces 13A to 13F.

Subsequently, each of the pillars 14 to 18 forming five vertical pillars will be described. The left front pillar 14 is disposed on the left front part of the cab box 13 and forms a ridge line between the front surface 13A and the left front surface 13B. The right front pillar 15 is located on the right front part of the cab box 13 and forms a ridge line between the front surface 13A and the right surface 13D.

The left intermediate pillar 16 is located on the left side of the cab box 13 and provided on the intermediate portion in the front-rear direction and is disposed in the vicinity of the left side of the operator's seat 10 at a boundary position between the left front surface 13B and the left rear surface 13C. On the left intermediate pillar 16, the door 30 opening/closing the entrance way 29 which will be described later is mounted rotatably in the front-rear direction.

The left rear pillar 17 is disposed on the rear side of the cab box 13 and at a rear position of the operator's seat 10. The right rear pillar 18 is located on the right rear part of the cab box 13 and forms a ridge line between the right surface 13D and the rear surface 13E.

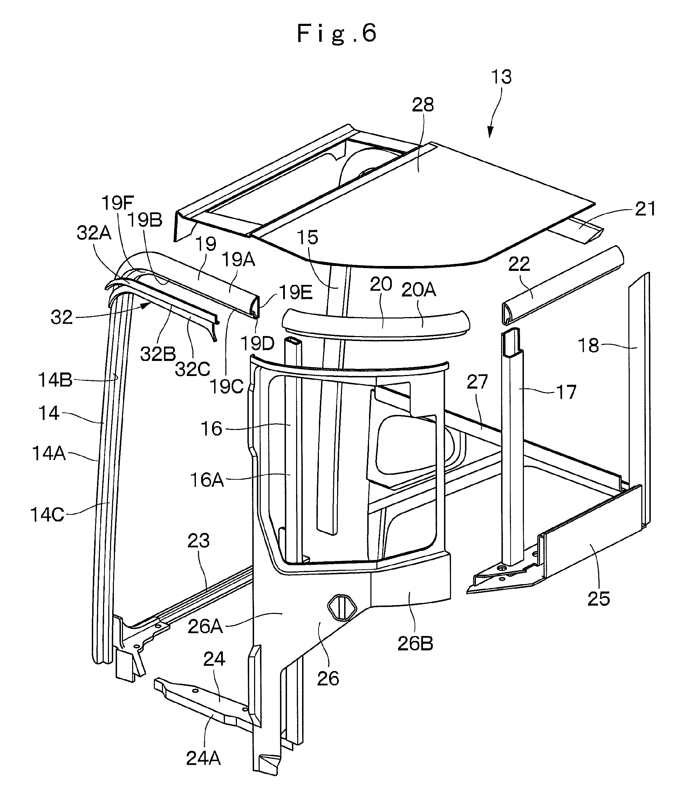

On the other hand, the left front roof pillar 19 forms the roof pillar of the cab box 13, and the left front roof pillar 19 is provided between an upper part of the left front pillar 14 and an upper part of the left intermediate pillar 16. This left front roof pillar 19 forms a ridge line between the left front surface 13B and the top surface 13F of the cab box 13. Here, as illustrated in Fig. 6, the left front roof pillar 19 is formed as an integral body bent in a L-shape from the upper part of the left front pillar 14 toward the rear side by bending a single irregular-shaped pipe material.

The left rear roof pillar 20 is provided on the rear side of the left front roof pillar 19, and the left rear roof pillar 20 is provided between an upper part of the left intermediate pillar 16 and an upper part of the left rear pillar 17. This left rear roof pillar 20 forms a ridge line between the left rear surface 13C and the top surface 13F of the cab box 13. Here, the left rear roof pillar 20 is curved having an outwardly projecting arc shape and its outer surface 20A extends outward from a left rear panel 26 which will be described later within the virtual circle C having a revolving radius R.

The right roof pillar 21 is disposed on the right upper side of the cab box 13, and the right roof pillar 21 forms a ridge line between the right surface 13D and the top surface 13F. The rear roof pillar 22 is disposed on the rear upper side of the cab box 13, and the rear roof pillar 22 forms a ridge line between the rear surface 13E and the top surface 13F.

A front lower connecting member 23 connects a lower part of the left front pillar 14 and a lower part of the right front pillar 15. A left lower connecting member 24 connects the lower part of the left front pillar 14 and a lower part of the left intermediate pillar 16. A rear lower connecting member 25 connects a lower part of the left rear pillar 17 and a lower part of the right rear pillar 18.

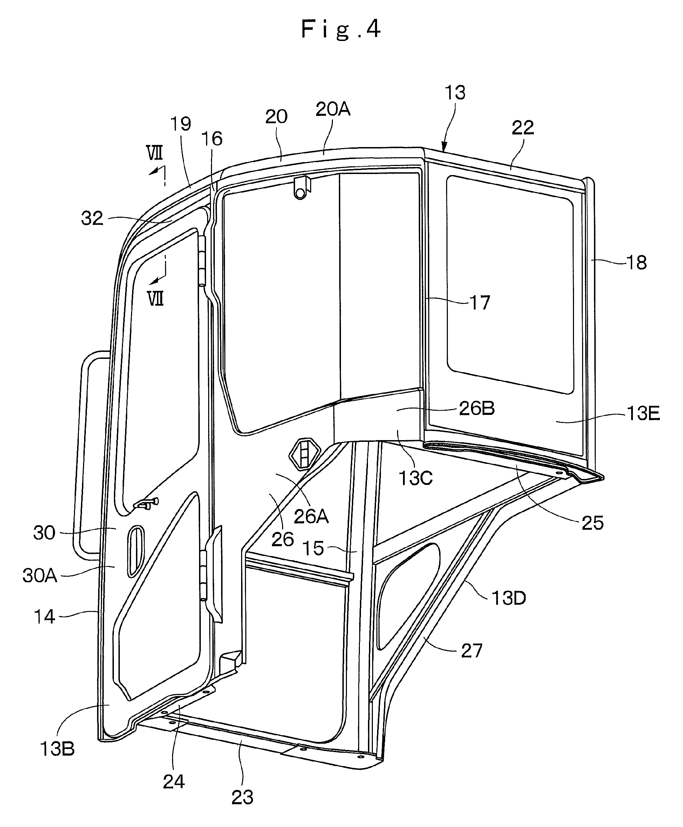

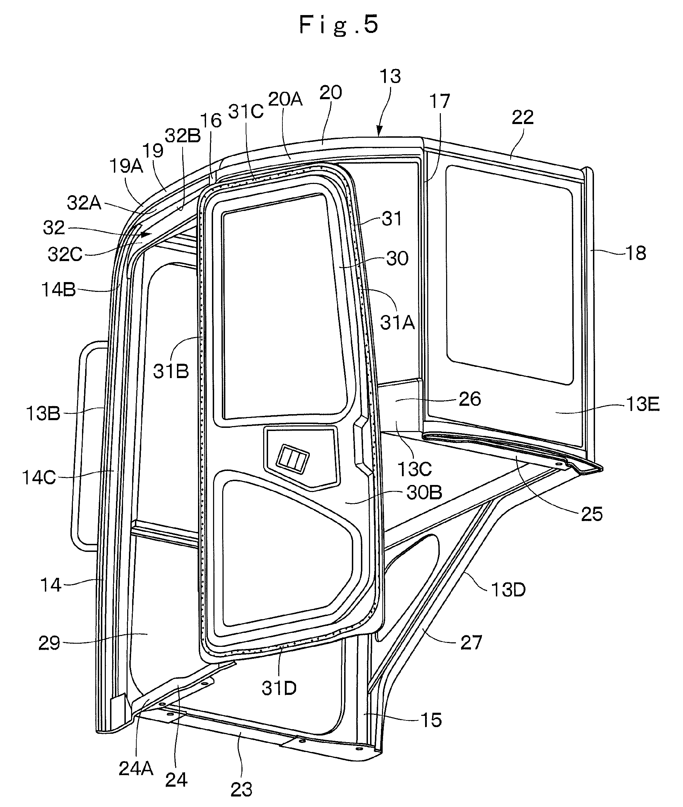

A left rear panel 26 is to cover a space between the left intermediate pillar 16 and the left rear pillar 17, and the left rear panel 26 forms the left rear surface 13C of the cab box 13. As illustrated in Fig. 4, this left rear panel 26 is formed as a bent surface protruding outward at an intermediate position between the left intermediate pillar 16 and the left rear pillar 17. That is, the left rear panel 26 is constituted by a substantially flat front flat surface 26A located on the front side from the intermediate position and a rear flat surface 26B located on the rear side from the intermediate position. As illustrated in Fig. 5, the front flat surface 26A of the left rear panel 26 is a fixed surface to which the door 30 is fixed at this full open position when the door 30 which will be described later is opened to the full open position on the rear side.

Here, the front flat surface 26A of the left rear panel 26 is arranged at a position on the depth on the operator's room 13G side from the outer surface 20A of the left rear roof pillar 20. As a result, in a state where the door 30 is opened and faced with the front flat surface 26A, a part of the door 30 can be accommodated on the lower side of the left rear roof pillar 20, and the door 30 can be substantially contained in the virtual circle C of the revolving radius R.

A right panel 27 is to cover a space between the right front pillar 15 and the right rear pillar 18, and the right panel 27 forms the right surface 13D of the cab box 13. A ceiling panel 28 is to cover a space among the left front roof pillar 19, the left rear roof pillar 20, the right roof pillar 21, and the rear roof pillar 22, and the ceiling panel 28 forms the top surface 13F of the cab box 13.

Designated at 29 is an entrance way (See Fig. 5) provided on the left front surface 13B of the cab box 13. This entrance way 29 is formed as an opening surrounded by the left front pillar 14, the left intermediate pillar 16, the left front roof pillar 19, and the left lower connecting member 24. The entrance way 29 is a passage when the operator gets on/off the operator's room 13G in the cab 8 and is opened/closed by the door 30 which will be described later.

Here, the shapes of the left front pillar 14, the left intermediate pillar 16, the left front roof pillar 19, and the left lower connecting member 24 described above and arranged so as to surround the entrance way 29 opened/closed by the door 30 will be described in detail.

That is, as illustrated in Figs. 5 and 6, the left front pillar 14 located on the front side of the entrance way 29 is formed as a pipe member curved so as to be gently inclined upward to the rear side. The left front pillar 14 is composed as an irregular pipe having an outer surface plate portion 14A located on the outside in the left-right direction and extending in the vertical direction while being curved, a bent plate portion 14B located on the rear side of the outer surface plate portion 14A and extending in the vertical direction while being bent inward from the outer surface plate portion 14A, and a seal receiving surface 14C having a sectional surface bent in the L-shape and extending in the vertical direction from the depth portion of the bent plate portion 14B to the rear side. Here, the seal receiving surface 14C of the left front pillar 14 accommodates the front side portion of the door 30 when the door 30 is closed and with which the seal member 31 provided in the periphery of the door 30 is brought into elastic contact.

That is, the seal receiving surface 14C of the left front pillar 14 is with which a front seal portion 31A located on the front side and extending in the vertical direction (upper and lower direction) in the seal member 31 provided on the entire periphery of the door 30 is brought into contact. In this case, since the front seal portion 31A extends in the vertical direction, rainwater or earth and sand hitting the front seal portion 31A immediately flows down along the front seal portion 31A and thus, in the seal line between the seal receiving surface 14C and the front seal portion 31A, entry of rainwater and earth and sand into the cab 8 can be prevented even with low air tightness.

Therefore, on the seal receiving surface 14C of the left front pillar 14, even if an area with which the front seal portion 31A is brought into contact is small, entry of rainwater and earth and sand and the like into the cab 8 can be prevented, and thus, a width dimension of the seal receiving surface 14C can be set small. As a result, the left front pillar 14 can be easily manufactured by simplifying the sectional shape of the pipe material which becomes a base, and moreover, this pipe material can be easily bent and machined.

Subsequently, the left intermediate pillar 16 located on the rear side of the entrance way 29 will be described. This left intermediate pillar 16 is made of a square pipe material extending in the vertical direction, and the outer surfaces in the left-right direction are seal receiving surfaces 16A with which the rear seal portion 31B of the seal member 31 is brought into contact. This seal receiving surface 16A forms a seal line extending in the vertical direction and thus, entry of rainwater and earth and sand into the cab 8 can be prevented even with low air tightness similarly to the above described seal receiving surface 14C of the left front pillar 14.

Subsequently, the left front roof pillar 19 located on the upper side of the entrance way 29 will be described. This left front roof pillar 19 bends from an upper part of the left front pillar 14 and extends to the rear side. This left front roof pillar 19 is formed integrally with the left front pillar 14 by applying bending to an irregular pipe material forming the left front pillar 14. A rear portion of the left front roof pillar 19 is connected to the upper part of the left intermediate pillar 16 and a front portion of the left rear roof pillar 20. It should be noted that the left front roof pillar 19 may be configured to be provided separately from the left front pillar 14 and fixed integrally by using welding means or the like.

The left front roof pillar 19 is composed of an outer surface plate portion 19A located on the outside in the left-right direction and extending in the front-rear direction while being curved, an upper horizontal plate portion 19B bent inward in the horizontal direction from a lower end portion of the outer surface plate portion 19A, and extending in the front-rear direction, a lower vertical plate portion 19C bent from the depth portion of the upper horizontal plate portion 19B downward and extending in the front-rear direction, a lower horizontal plate portion 19D bent inward in the horizontal direction from a lower end portion of the lower vertical plate portion 19C, and extending in the front-rear direction, and a rear surface plate portion 19E connecting an inner end of the lower horizontal plate portion 19D and an inner end of the outer surface plate portion 19A in the front-rear direction. As a result, the left front roof pillar 19 forms a recessed portion 19F recessed having a stepped shape inward from the outer surface plate portion 19A in a space portion surrounded by the upper horizontal plate portion 19B and the lower vertical plate portion 19C.

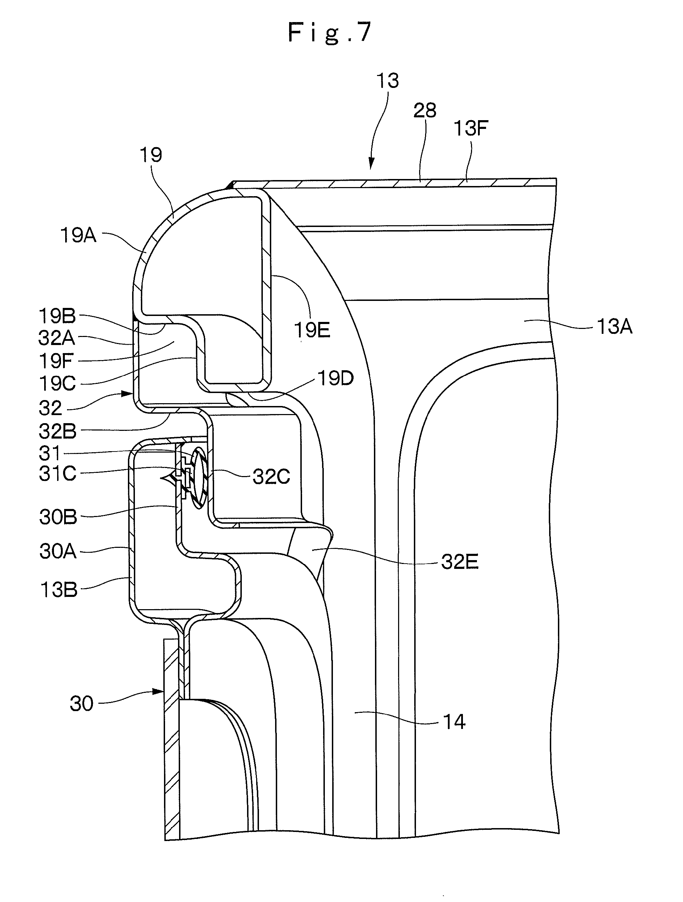

The left front roof pillar 19 is formed continuously to the upper side of the left front pillar 14 and thus, the outer surface plate portion 19A continues to the outer surface plate portion 14A of the left front pillar 14, the upper horizontal plate portion 19B continues to the bent plate portion 14B, and the lower vertical plate portion 19C continues to the seal receiving surface 14C. However, the lower vertical plate portion 19C is not to be fitted with an upper end of the door 30, but the upper end of the door 30 fits in a horizontal plate portion 32B of a seal receiving member 32 which will be described later (See Fig. 7).

Here, the lower vertical plate portion 19C of the left front roof pillar 19 is formed continuously from the seal receiving surface 14C of the left front pillar 14. However, in the seal member 31, since rainwater or earth and sand do not flow easily on an upper seal portion 31C provided extending in the front-rear direction at an upper position of the door 30, it is concerned that rainwater or earth and sand might enter the cab 8 with a seal structure with low air tightness. Thus, in this embodiment, a seal receiving member 32 which will be described later and can be brought into contact with this upper seal portion 31C in a large area is provided at a lower side position of the left front roof pillar 19 with which the upper seal portion 31C of the seal member 31 is brought into contact in configuration.

The left lower connecting member 24 located on the lower side of the entrance way 29 is formed extending in the front-rear direction and the outside in the left-right direction is a seal receiving surface 24A with which a lower seal portion 31D of the seal member 31 is brought into contact. This seal receiving surface 24A is to form a seal line on the lower part and thus, entry of rainwater or earth and sand into the cab 8 can be prevented even with low air tightness.

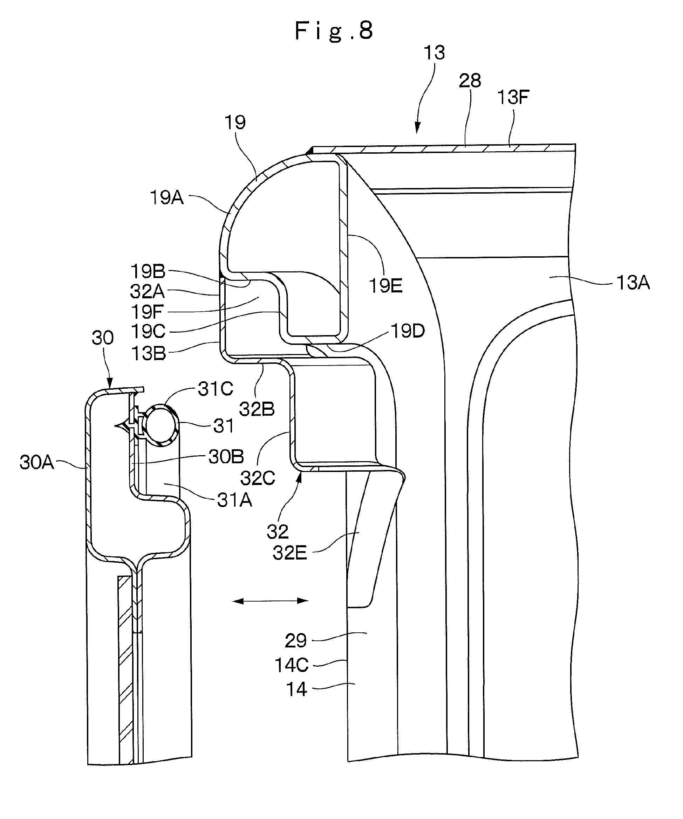

Designated at 30 is the door rotatably mounted on the left intermediate pillar 16 of the cab box 13. This door 30 is to open/close the entrance way 29 and is formed having a substantially rectangular shape which is lengthy in the vertical direction so as to correspond to the entrance way 29, and its rear end is mounted rotatably in the front-rear direction with respect to the left intermediate pillar 16. As illustrated in Fig. 4, the door 30 is operated to be opened/closed between a closed position where the door is rotationally moved to the front side and closes the entrance way 29 of the cab box 13 and a full open position where the door is rotationally moved to the rear side and opens the entrance way 29 faced with the front flat surface 26A of the left rear panel 26 as illustrated in Fig. 5. As illustrated in Figs. 7 and 8, the door 30 is formed by joining a single outer surface panel 30A and a single inner surface panel 30B faced with each other. Moreover, the seal member 31 which will be described later located in the periphery of the inner surface panel 30B which becomes an inner surface is provided around the door 30.

When the door 30 is rotationally moved to the front side and closed, the front side portion and the upper side portion of the door 30 can enter the seal receiving surface 14C of the left front pillar 14 and the seal receiving surface 32C of the seal receiving member 32, and in this state, the outer surface panel 30A which becomes an outer surface of the door 30 becomes the same plane as the outer surface plate portion 14A of the left front pillar 14 and the outer surface plate portion 19A of the left front roof pillar 19. It should be noted that the same plane does not literally mean the same plane but means a state in which the outer surface panel 30A of the door 30 and the outer surface plate portion 14A of the left front pillar 14 and the outer surface plate portion 19A of the left front roof pillar 19 seem to form a continuous surface on appearance or specifically, a case in which they have a step in an allowable range on design can be considered as the same plane.

Designated at 31 is the seal member provided by surrounding the periphery of the inner surface panel 30B of the door 30, and the seal member 31 seals a space between the cab box 13 and the door 30 over the entire periphery when the door 30 is closed. As illustrated in Fig. 5, the seal member 31 is arranged on the outer periphery (peripheral edge) of the inner surface panel 30B and is formed extending and having a rectangular shape conforming to the rectangular door 30. That is, the seal member 31 is composed of the front seal portion 31A located on the front side and extending in the vertical direction, the rear seal portion 31B located on the rear side and extending in the vertical direction, the upper seal portion 31C located on the upper side and extending in the horizontal direction, and the lower seal portion 31D located on the lower side and extending in the horizontal direction.

The seal member 31 is made of a rubber material or the like having elasticity and flexibility and when the door 30 is closed, the front seal portion 31A is brought into elastic contact with the seal receiving surface 14C of the left front pillar 14, the rear seal portion 31B is brought into elastic contact with the seal receiving surface 16A of the left intermediate pillar 16, the upper seal portion 31C is brought into elastic contact with the seal receiving surface 32C of the seal receiving member 32 which will be described later, and the lower seal portion 31D is brought into elastic contact with the seal receiving surface 24A of the left lower connecting member 24.

Here, since the upper seal portion 31C of the seal member 31 extends in the front-rear direction (horizontal direction), rainwater, earth and sand, dusts or the like can easily collect on this upper seal portion 31C. Thus, if the contact area of the upper seal portion 31C with respect to the cab box 13 is small and air tightness is low, it is concerned that rainwater, earth and sand, dusts or the like enters the upper seal portion 31C.

Thus, in this embodiment, in order that the upper seal portion 31C of the seal member 31 is brought into contact in a large area on the upper side portion of the entrance way 29 requiring high air tightness, the seal receiving member 32 is configured to be provided at a position faced with this upper seal portion 31C.

That is, designated at 32 is the seal receiving member provided at a position on the lower side of the left front roof pillar 19 of the cab box 13. The horizontal plate portion 32B which will be described later and constitutes this seal receiving member 32 is arranged by extending in the front-rear direction in a state fitted in the lower side of the recessed portion 19F of the left front roof pillar 19. The seal receiving member 32 is brought into contact with the upper seal portion 31C extending in the front-rear direction on the upper side position in the seal member 31 while being elastically deformed when the door 30 is closed. The seal receiving member 32 is brought into contact with the upper seal portion 31C of the seal member 31 in a large area on the upper side portion of the entrance way 29, requiring high air tightness.

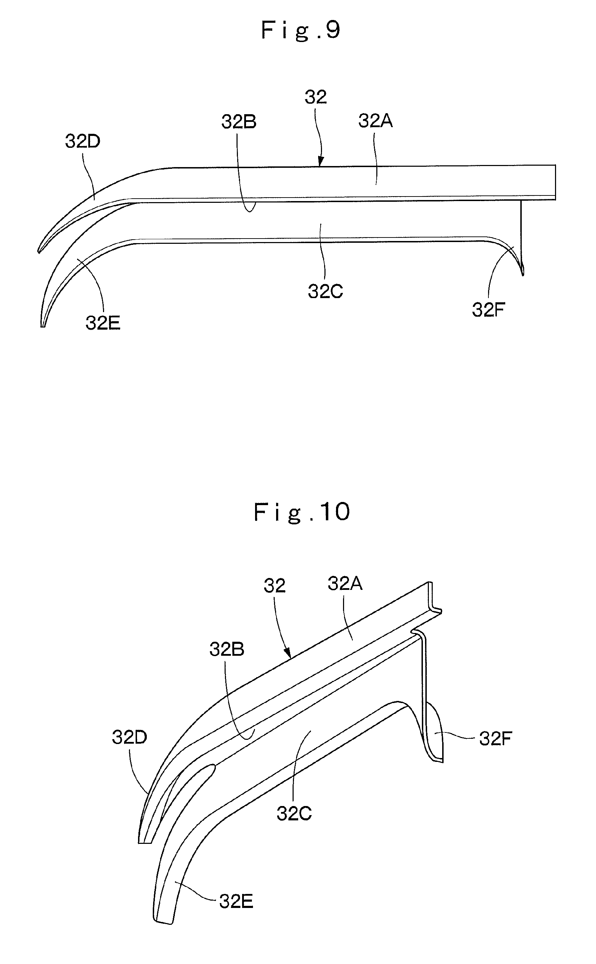

As illustrated in Figs. 9 and 10, the seal receiving member 32 is composed of an outer vertical plate portion 32A located on the outside in the left-right direction and extending in the front-rear direction, the horizontal plate portion 32B bent from a lower end portion of the outer vertical plate portion 32A to the inside which becomes the side of the operator's room 13G in the horizontal direction and extending in the front-rear direction in a state fitted in the recessed portion 19F of the left front roof pillar 19, and the seal receiving surface 32C as an internal vertical plate portion bent from the depth portion of the horizontal plate portion 32B downward and extending in the front-rear direction, and the outer side surface of the seal receiving member 32 has a generally crank-shaped cross sectional shape. Therefore, when the door 30 is closed, the upper end of this door 30 can fit in the horizontal plate portion 32B of the seal member 31, and the upper seal portion 31C of the seal member 31 is brought into contact with the seal receiving surface 32C while being elastically deformed.

The front side portion of the outer vertical plate portion 32A of the seal receiving member 32 is an arc-shaped connecting portion 32D curved downward so as to be able to smoothly connect to the bent plate portion 14B of the left front pillar 14. Similarly, the front side portion of the seal receiving surface 32C of the seal receiving member 32 is an arc-shaped connecting portion 32E curved downward so as to be able to smoothly connect to the seal receiving surface 14C of the left front pillar 14. Moreover, the rear side portion of the seal receiving surface 32C is an arc-shaped connecting portion 32F so as to smoothly connect to the left intermediate pillar 16.

As illustrated in Figs. 7 and 8, in the seal receiving member 32, an upper end edge of the outer vertical plate portion 32A is fixed to a lower end edge of the outer surface plate portion 19A of the left front roof pillar 19 using welding means. On the other hand, the arc-shaped connecting portion 32D on the front side is fixed to the bent plate portion 14B of the left front pillar 14 using welding means, and the arc-shaped connecting portion 32E is fixed to the seal receiving surface 14C of the left front pillar 14 by using welding means. Moreover, the rear end portion of the outer vertical plate portion 32A and the arc-shaped connecting portion 32F on the rear side are fixed to the upper part of the left intermediate pillar 16 by using welding means.

Here, the seal receiving member 32 is provided separately from the left front roof pillar 19 and the like, and thus, the outer vertical plate portion 32A, the horizontal plate portion 32B, and the seal receiving surface 32C can be freely designed within a range that can be mounted on the cab box 13. That is, the seal receiving member 32 can be formed such that the seal receiving surface 32C with which the upper seal portion 31C of the seal member 31 is brought into contact has a larger width in the vertical direction. As a result, the upper seal portion 31C can be brought into contact with the seal receiving surface 32C with a large area, and thus, air tightness between the seal receiving surface 32C and the upper seal portion 31C can be improved.

It should be noted that the working mechanism 33 is provided on the front side of the upper revolving structure 4, capable of moving upward/downward and performs an excavating work of earth and sand and the like. The working mechanism 33 is composed of a boom 33A, an arm, a bucket and the like (none of them is shown) .

The hydraulic excavator 1 according to this embodiment has the above described configuration, and an operation thereof will be described below.

The operator opens the door 30 and gets onto the cab 8 through the entrance way 29, closes the door 30 and sits on the operator's seat 10. In this state, by operating the operating lever/pedal 12 for running, the lower traveling structure 2 can be made to run. On the other hand, by operating the operating lever 11 for work, the upper revolving structure 4 can be revolved, and the working mechanism 33 can be moved upward/downward so as to carry out an excavating work of earth and sand or the like.

Here, during running or working of the hydraulic excavator 1, rainwater, earth and sand, dusts and the like falls down on the cab 8. In this case, the seal member 31 is provided in the periphery of the door 30, and by bringing this seal member 31 into elastic contact with the cab box 13 side, entry of rainwater, earth and sand, dusts and the like into the cab 8 can be prevented. Particularly, in the seal member 31, rainwater, earth and sand, dusts and the like do not easily flow and it is concerned that they collect on the upper seal portion 31C located on the upper side extending in the front-rear direction and enter the cab 8.

However, according to this embodiment, on the lower side of the left front roof pillar 19 forming the roof pillar of the cab box 13, the seal receiving member 32 is provided separately from this left front roof pillar 19, and the seal receiving member 32 is configured such that the seal receiving surface 32C with which the upper seal portion 31C extending in the front-rear direction at the upper side position of the seal member 31 when the door 30 is closed is brought into contact can be formed with a large area.

Therefore, when the door 30 is closed, since the upper seal portion 31C of the seal member 31 can be brought into contact with the seal receiving surface 32C of the seal receiving member 32 with a large area, the seal line between this upper seal portion 31C and the seal receiving surface 32C can obtain high air tightness against rainwater and earth and sand.

As a result, even on the seal line in the front-rear direction where rainwater, earth and sand, dusts and the like do not flow easily, entry of rainwater, earth and sand into the cab 8 can be reliably prevented by increasing a contact area of the upper seal portion 31C with the seal receiving surface 32C so as to improve air tightness. Therefore, a work environment in the cab 8 can be made favorable. Moreover, since the seal receiving member 32 is provided separately from the left front pillar 14 and the left front roof pillar 19, a sectional shape of a pipe material which becomes a base of these left front pillar 14 and the left front roof pillar 19 can be simplified, and forming, bending and the like can be performed easily.

Moreover, in a state where the door 30 is closed, the periphery of the door 30 can be fitted in each of the recessed portions 19F. As a result, since the outer surface panel 30A of the door 30 can be made the same plane as the outer surface plate portions 14A and 19A of the left front pillar 14 and the left front roof pillar 19, interference with an obstruction in the periphery of the door 30 when the upper revolving structure 4 performs a revolving operation can be prevented, and appearance can be made favorable.

On the other hand, the seal receiving member 32 is configured to be fixed to the left front roof pillar 19, the upper part of the left front pillar 14, and the upper part of the left intermediate pillar 16 by using welding means. As a result, the seal receiving member 32 can be easily mounted on the cab box 13. Moreover, by integrally welding the seal receiving member 32 to left front roof pillar 19, the left front pillar 14, and the left intermediate pillar 16, strength of the cab box 13 including them can be improved.

Further, since the seal receiving member 32 has a crank-shaped sectional shape by the outer vertical plate portion 32A, the horizontal plate portion 32B, and the seal receiving surface 32C, when the door 30 is closed, the upper side portion of the door 30 can be made to enter the inside of the horizontal plate portion 32B. Moreover, the upper seal portion 31C of the seal member 31 can be brought into contact with the seal receiving surface 32C as a seal receiving surface.

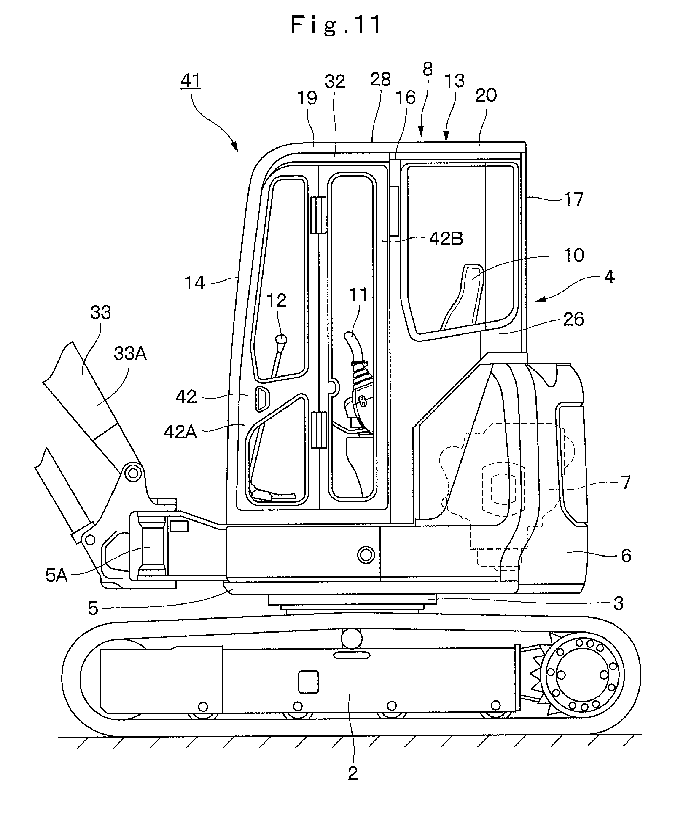

It should be noted that in this embodiment, the case in which the door 30 is formed having a single plate shape by joining the single outer surface panel 30A and the single inner surface panel 30B faced with each other is explained as an example. However, the present invention is not limited to that but may be configured as the hydraulic excavator 41 according to a modification illustrated in Fig. 11, for example. That is, in Fig. 11, designated at 42 is a door according to a modification provided on the cab 8, and the door 42 is formed by connecting a front door portion 42A and a rear door portion 42B which are divided into two parts in the front-rear direction by using a hinge. Here, a seal member (not shown) is provided on the periphery of each of the front door portion 42A and the rear door portion 42B, and an upper seal portion of each seal member can be brought into contact with the seal receiving member 32 when the door 42 is closed.

On the other hand, in the embodiment, the hydraulic excavator 1 with cab specification provided with the crawler-type lower traveling structure 2 as a construction machine is explained as an example. However, the present invention is not limited to that and may be applied to a hydraulic excavator with cab specification provided with a wheel-type lower traveling structure, a hydraulic crane similarly with cab specification and the like, for example.

### DESCRIPTION OF REFERENCE NUMERALS

- 1, 41:: Hydraulic excavator (Construction machine)
- 2:: Lower traveling structure
- 4:: Upper revolving structure
- 5:: Revolving frame
- 8:: Cab
- 9:: Floor member
- 10:: Operator's seat
- 13:: Cab box
- 13A:: Front surface
- 13B:: Left front surface
- 13C:: Left rear surface
- 13D:: Right surface
- 13E:: Rear surface
- 13F:: Top surface
- 13G:: Operator's room
- 14:: Left front pillar
- 14A, 19A:: Outer surface plate portion
- 14B:: Bent plate portion
- 14C, 16A, 24A:: Seal receiving surface
- 15:: Right front pillar
- 16:: Left intermediate pillar
- 17:: Left rear pillar
- 18:: Right rear pillar
- 19:: Left front roof pillar
- 19B:: Upper horizontal plate portion
- 19C:: Lower vertical plate portion
- 19D:: Lower horizontal plate portion
- 19E:: Rear surface plate portion
- 19F:: Recessed portion
- 20:: Left rear roof pillar
- 21:: Right roof pillar
- 22:: Rear roof pillar
- 24:: Left lower connecting member
- 29:: Entrance way
- 30, 42:: Door
- 31:: Seal member
- 31A:: Front seal portion
- 31B:: Rear seal portion
- 31C:: Upper seal portion
- 31D:: Lower seal portion
- 32:: Seal receiving member
- 32A:: Outer vertical plate portion
- 32B:: Horizontal plate portion
- 32C:: Seal receiving surface (Inner vertical plate portion)
- 33:: Working mechanism

## Claims

1. A construction machine comprising:
an automotive lower traveling structure (2), an upper revolving structure (4) rotatably mounted on said lower traveling structure (2) and having a cab (8) provided on a revolving frame (5) forming a support structural body, and a working mechanism (33) tiltably provided on the front side in the front-rear direction of said upper revolving structure (4), wherein
said cab (8) is provided with;
a cab box (13) in which five pillars (14, 15, 16, 17, 18) extending in the vertical direction by being located on the left front, the right front, the left intermediate, the left rear, and the right rear and roof pillars (19, 20, 21, 22) connecting an upper part of each of said pillars (14, 15, 16, 17, 18) are provided, and spaces between each of said pillars (14, 15, 16, 17, 18, 19, 20, 21, 22) become a front surface (13A), a left front surface (13B), a left rear surface (13C), a right surface (13D), a rear surface (13E), and a top surface (13F);
an entrance way (29) provided on said left front surface (13B) surrounded by said left front pillar (14), said left intermediate pillar (16), and said left front roof pillar (19) of said cab box (13);
a door (30, 42) having the rear end mounted on said left intermediate pillar (16) rotatably in the front-rear direction in order to open/close said entrance way (29); and
a seal member (31) provided by surrounding a periphery of an inner surface (30B) of said door (30, 42) and sealing between said door (30, 42) and said cab box (13) over the entire periphery when said door (30, 42) is closed, **characterized in that**:
a seal receiving member (32) is provided on the lower side of said left front roof pillar (19) forming said roof pillar, and
an upper seal portion (31C) extending in the front-rear direction at an upper side position of said door (30, 42) in said seal member (31) is configured to be brought into contact with said seal receiving member (32).

2. The construction machine according to claim 1, wherein
a lower surface of said left front roof pillar (19) is formed as a recessed portion (19F) which is recessed in a stepped state from an outer surface (19A) to an inner side, said seal receiving member (32) is provided on the lower side of said recessed portion (19F) of said left front roof pillar (19), and said upper seal portion (31C) of said door (30, 42) is configured to be brought into contact with said seal receiving member (32) in a state where said door (30, 42) is closed.

3. The construction machine according to claim 1, wherein
said seal receiving member (32) is configured to be mounted on a lower side position of an outer surface (19A) of said left front roof pillar (19) by using welding means.

4. The construction machine according to claim 2, wherein
said seal receiving member (32) is formed, having a crank shape, of an outer vertical plate portion (32A)located on the lower side of said outer surface (19A) of said left front roof pillar (19) and extending in the front-rear direction, a horizontal plate portion (32B) bent in the horizontal direction inward from a lower end portion of said outer vertical plate portion (32A) and extending in the front-rear direction in a state fitted in said recessed portion (19F) of said left front roof pillar (19), and an inner vertical plate portion (32C) bent downward from a depth portion of said horizontal plate portion (32B) and extending in the front-rear direction; and
said seal member (31) provided on said door (30, 42) is configured to be brought into contact with said inner vertical plate portion (32C).
